# FASCICULE DE BREVET EUROPEEN

(11) **EP 2 774 326 B1**
(45) Date de publication et mention de la délivrance du brevet: **13.03.2019**
(21) Numéro de dépôt: 12783938.9
(22) Date de dépôt: 29.10.2012
(51) Int. Cl.: H04L 12/28, H04L 12/66, H04L 29/06

(54) **PROCEDE ET SYSTEME D'ASSOCIATION D'UN EQUIPEMENT AVEC UNE PASSERELLE**
VERFAHREN UND SYSTEM ZUM ASSOZIIEREN EINER VORRICHTUNG MIT EINEM GATEWAY
METHOD AND SYSTEM FOR ASSOCIATING A DEVICE WITH A GATEWAY

(30) Priorité: 04.11.2011 FR 1159977; 09.10.2012 FR 1259602
(43) Date de publication de la demande: 10.09.2014
(73) Titulaire: Delta Dore, 35270 Bonnemain (FR)
(72) Inventeur: LE TUTOUR, Jean, F-22690 Pleudihen sur Rance (FR)
(74) Mandataire: Cabinet Le Guen Maillet
(86) Numéro de dépôt international: PCT/EP2012/071394
(87) Numéro de publication internationale: WO 2013/064464

(56) Documents cités:
- EP-A1- 2 053 790
- WO-A2-2008/048933
- US-A1- 2011 093 704

## Description

La présente invention concerne un procédé et un système d'association d'un équipement avec une passerelle.

Il est connu qu'une passerelle, par exemple résidentielle, comporte des moyens pour qu'un équipement, de type multimédia, tel qu'un ordinateur, ou domotique, tel qu'un volet roulant ou un capteur, puisse s'associer avec cette passerelle. A cet effet, il est connu qu'il faille mettre préalablement à une association la passerelle dans un mode de fonctionnement particulier en appuyant sur un bouton de cette passerelle.

Ainsi un utilisateur peut, à sa guise, associer de nouveaux équipements à une passerelle et ainsi centraliser sur cette passerelle l'accès à une pluralité d'équipements. Toutefois, l'inventeur a observé qu'il était préférable de restreindre la possibilité qu'un utilisateur a de pouvoir associer à n'importe quel moment un nouvel équipement car cet équipement pourrait interférer avec d'autres équipements déjà associés et perturber le fonctionnement de l'ensemble des équipements La demande de brevet européen EP 2 053 790 A1 divulgue un procédé de mise en oeuvre de gestion de configuration de dispositifs dans un réseau, un dispositif et un système correspondants.

La demande de brevet US 2011/0093704 A1 décrit un procédé et un appareil dans lequel un dispositif capable d'une communication en champ proche reçoit un service d'un réseau extérieur à l'aide d'une fonction de communication d'un dispositif capable d'accéder au réseau extérieur. Un réseau personnel est constitué avec des dispositifs ayant différents utilisateurs, des informations d'abonné sont acquises et authentifiées de façon sécurisée pour chaque utilisateur, permettant ainsi de fournir plus facilement un service reçu du réseau extérieur au dispositif compris dans le réseau personnel.

Le problème résolu par la présente invention est donc de restreindre à des moments particuliers la possibilité qu'a un utilisateur (installateur) de pouvoir associer un nouvel équipement à une passerelle.

A cet effet, la présente invention concerne un procédé d'association d'au moins un équipement avec une passerelle prévue pour communiquer, d'une part, avec le au moins un équipement via un réseau de communication et, d'autre part, avec un autre équipement dit serveur, caractérisé en ce que une autorisation d'association est mémorisée dans la passerelle et en ce que le procédé comporte les étapes de :
- association du au moins un équipement avec la passerelle par un installateur ou un utilisateur,
- enregistrement par la passerelle d'une liste des équipements qui sont associés avec la passerelle,
- envoi par la passerelle au serveur de la liste des équipements associés,
- réception par la passerelle d'une interdiction qu'un équipement s'associe à la passerelle du serveur.

L'invention concerne aussi une passerelle comportant des moyens pour communiquer, d'une part, avec au moins un équipement via un réseau de communication et, d'autre part, avec un autre équipement, dit serveur, caractérisé en ce que une autorisation d'association est mémorisée dans la passerelle et en ce que la passerelle comporte en outre :
- des moyens d'association du au moins un équipement avec la passerelle par un installateur ou un utilisateur,
- des moyens d'enregistrement par la passerelle d'une liste des équipements qui sont associés avec la passerelle,
- des moyens d'envoi par la passerelle au serveur de la liste des équipements associés,
- des moyens de réception par la passerelle d'une interdiction qu'un équipement s'associe à la passerelle du serveur.

Le procédé permet de contrôler à distance, de manière asynchrone ou synchrone, des périodes temporelles pendant lesquelles un équipement peut s'associer à la passerelle et de contrôler que certains équipements ne soient pas associés à la passerelle. A défaut de réception préalable de cette autorisation, aucun équipement ne peut s'associer à la passerelle. Lorsque la passerelle reçoit une interdiction qu'un équipement s'associe à la passerelle, l'association de cet équipement est supprimée.

Selon un mode de réalisation, le serveur envoie à la passerelle une autorisation pour qu'un équipement puisse s'associer à la passerelle.

Selon un mode de réalisation, l'association d'un équipement avec la passerelle est conditionnée à une action mécanique préalable d'un utilisateur sur la passerelle.

Ce mode de réalisation est asynchrone c'est-à-dire que, dans un premier temps, la passerelle est autorisée à ce qu'un équipement vienne s'associer avec elle sans pour autant qu'un équipement puisse le faire car ce n'est que postérieurement à l'action mécanique d'un utilisateur qu'un équipement peut s'associer avec elle. Il est requis que ces deux étapes soient réalisées pour que l'association soit effective. Ces deux étapes peuvent être distantes dans le temps, d'où l'appellation de asynchrone.

Selon un mode de réalisation, l'autorisation envoyée à la passerelle désigne aussi l'un des équipements qui lui est associé et ledit procédé se poursuit alors par la suppression de cet équipement de la liste des équipements mémorisée par la passerelle et un nouvel équipement est alors autorisé à être associé à la passerelle.

Ce mode de réalisation permet au serveur d'indiquer à la passerelle un équipement particulier qui ne doit plus être associé avec elle. Ce mode de réalisation est synchrone c'est-à-dire qu'un équipement peut être effectivement associé à la passerelle dès que l'équipement désigné est supprimé de la liste des équipements. Ceci est par exemple utilisé lorsqu'un équipement défectueux doit être remplacé car dans ce cas l'équipement défectueux est supprimé de la liste des équipements et la passerelle est alors de suite autorisée à ce que l'équipement de rechange soit associé à la passerelle.

Selon un mode de réalisation, cette autorisation est mémorisée par la passerelle.

Selon un mode de réalisation, chaque équipement associé à la passerelle correspond à un type d'équipement et un identifiant est affecté à chaque équipement associé à la passerelle, l'identifiant étant déterminé en fonction du nombre d'équipements de même type que l'équipement qui précède l'équipement dans la liste.

Selon un mode de réalisation, le nouvel équipement autorisé à être associé à la passerelle a le même identifiant que l'équipement supprimé et est inséré dans la liste à la place de l'équipement supprimé.

Ainsi la gestion des identifiants des équipements est simplifiée à la fois au niveau du serveur qu'au niveau de la passerelle.

Selon un mode de réalisation, pour chaque équipement associé à la passerelle, la liste comporte un numéro de série de l'équipement, le type de l'équipement et l'identifiant de l'équipement.

Selon un mode de réalisation, le procédé comporte une étape d'initialisation de l'autorisation qui est mémorisée par la passerelle.

Ce mode de réalisation permet de définir des périodes de temps pendant lesquelles un équipement peut être associé avec la passerelle et des périodes où ce n'est pas possible.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Selon ses aspects matériels, la présente invention concerne une passerelle comportant des moyens pour communiquer, d'une part, avec un équipement via un réseau de communication et, d'autre part, avec un autre équipement, dit serveur, et des moyens pour qu'un équipement puisse s'associer avec elle. La passerelle est caractérisée en ce qu'elle comporte, également, des moyens pour recevoir une autorisation pour qu'un équipement puisse s'associer avec elle.

Selon un autre de ses aspects matériels, la présente invention concerne un équipement comportant des moyens pour communiquer avec une passerelle via un réseau de communication, caractérisé en ce qu'il comporte des moyens pour envoyer une autorisation à destination de la passerelle pour qu'un équipement puisse s'associer avec elle.

Selon un autre de ses aspects, la présente invention concerne un système d'association d'un équipement avec une passerelle, ladite passerelle étant prévue pour communiquer, d'une part, avec l'équipement via un réseau de communication et, d'autre part, avec un autre équipement dit serveur. Le système est caractérisé en ce que l'équipement et la passerelle sont conformes respectivement à l'équipement et la passerelle ci-dessus.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente un système d'association d'un équipement avec une passerelle selon la présente invention.
La Fig. 2 illustre schématiquement l'architecture d'une passerelle.
La Fig. 3 illustre schématiquement l'architecture d'un équipement.
La Fig. 4 représente un exemple d'algorithme exécuté par la passerelle lorsqu'un équipement associé la passerelle doit être remplacé.
Les Figs. 5a à 5c représentent un exemple de l'évolution de la liste d'équipements associés à la passerelle lors de l'exécution de l'algorithme de la Fig. 4.

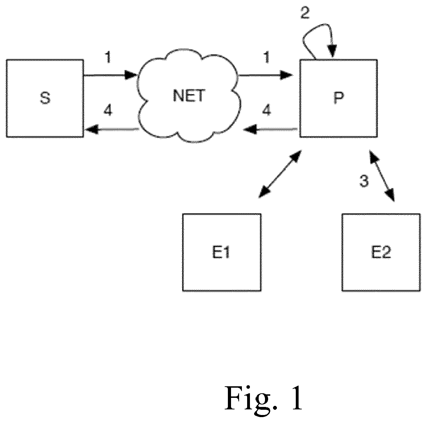

A la Fig. 1 est représenté un système d'association d'équipements, ici au nombre de deux et notés E1 et E2 avec une passerelle P.

La passerelle P est prévue pour communiquer, d'une part, avec l'équipement E1 et E2 via un réseau de communication (non représenté) et, d'autre part, avec un autre équipement dit serveur et noté S. Un tel système n'est qu'un exemple qui ne limite en rien la portée de la présente invention qui est indépendante du nombre d'équipements pouvant s'associer à la passerelle P.

Le système met en oeuvre un procédé d'association qui est illustré à la Fig. 1.

Le procédé comporte une étape 1 d'envoi, par le serveur S et à destination de la passerelle P, d'une autorisation AUT pour qu'un équipement (E1 ou E2) puisse s'associer avec cette passerelle P.

Selon un mode de réalisation, la passerelle P enregistre localement une liste des équipements qui sont associés avec elle. Cette liste est par la suite référencée L.

Selon un mode de réalisation, le procédé comporte une étape 4 d'envoi de la passerelle P au serveur S, de la liste des équipements L.

Selon un mode de réalisation, l'association d'un équipement, par exemple E2, avec la passerelle P, matérialisée sur la Fig. 1 par une étape 3, est conditionnée à une action mécanique préalable d'un utilisateur sur la passerelle P, par exemple sur un bouton de cette passerelle. Cette action est matérialisée sur la Fig. 1 par une étape 2. Ainsi, selon ce mode de réalisation, l'équipement E3 peut être associé à la passerelle P si, d'une part, une autorisation AUT a été reçue (étape 1) et si l'utilisateur a appuyé sur le bouton (étape 2). La réception de l'autorisation AUT et l'action sur le bouton ne sont pas forcément réalisées juste l'une après l'autre. Un laps de temps peut s'écouler car la passerelle P mémorise cette autorisation qui peut se présenter sous la forme d'un bit : la valeur « 1 » indique que l'autorisation est donnée et la valeur « 0 » indique que l'autorisation AUT n'a pas été reçue. La seule contrainte pour que l'équipement E2 puisse s'associer à la passerelle est que le bit soit à « 1 » et que l'utilisateur ait ensuite appuyé sur le bouton de la passerelle P. Un appui sur le bouton de la passerelle P, alors que le bit est à « 0 », ne provoque aucune action et l'équipement E2 ne peut alors pas s'associer.

Selon un mode de réalisation, l'autorisation AUT envoyée à la passerelle (étape 1) désigne aussi l'un des équipements qui lui est associé, par exemple E1, et le procédé se poursuit alors par la suppression de cet équipement de la liste des équipements mémorisée par la passerelle. Le procédé se poursuit alors par l'étape 3 et éventuellement l'étape 4 selon un mode de réalisation. L'étape 3 est réalisée dès que l'équipement désigné est supprimé de la liste des équipements L, c'est-à-dire que l'équipement E2 peut cette fois-ci être associé sans attendre une action mécanique préalable d'un utilisateur sur la passerelle.

Selon un mode de réalisation, cette autorisation AUT est mémorisée par la passerelle P par exemple sous la forme d'un bit à une valeur particulière « 1 ».

Selon un mode de réalisation, le procédé comporte une étape d'initialisation de l'autorisation qui est mémorisée par la passerelle P à une valeur particulière, par exemple à la valeur « 1 ». Cette initialisation peut être effectuée, par exemple, lors de la fabrication de la passerelle. Cette initialisation ne requiert pas que la passerelle P soit reliée au serveur S par un réseau de communication, ce qui est particulièrement intéressant lorsque le système est déployé dans un bâtiment neuf.

Selon un mode de réalisation, le procédé comporte également une étape d'envoi, par le serveur S et à destination de la passerelle P, d'une interdiction qu'un équipement (El ou E2) s'associe à la passerelle P. La réception par la passerelle P de cette interdiction modifie alors l'autorisation qui est mémorisée par la passerelle P. Par exemple, cette autorisation est mise à la valeur « 0 ».

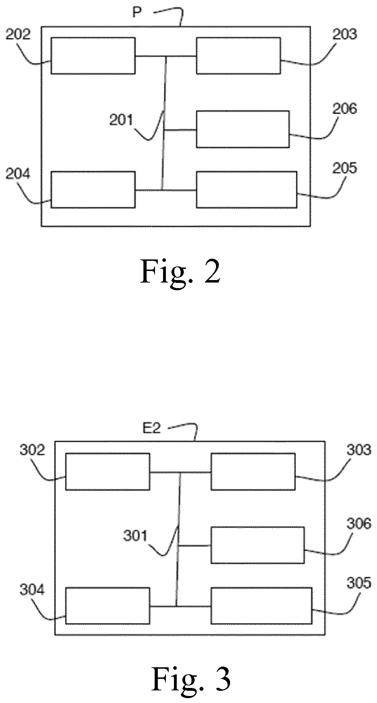

La Fig. 2 illustre schématiquement l'architecture de la passerelle P.

La passerelle P comporte, reliés par un bus de communication 201 :
- un processeur, micro-processeur ou microcontrôleur 202 ;
- une mémoire volatile 203 ;
- une mémoire non volatile204 ;
- éventuellement, un lecteur 205 de médium de stockage, tel qu'un lecteur de carte SD (*Secure Digital Card* en anglais ou *Carte Numérique Sécurisée* en français) ;
- des moyens d'interface 206 avec un réseau de communication NET, comme par exemple un réseau de radiotéléphonie cellulaire ou Internet; et
- des moyens d'interface homme-machine 207 permettant, par exemple, de gérer un écran tactile et/ou un ensemble de touches et/ou des boutons.

Le microcontrôleur 202 est capable d'exécuter des instructions chargées dans la mémoire volatile 203 à partir de la mémoire non volatile 204, d'une mémoire externe (non représentée), d'un support de stockage, tel qu'une carte SD ou autre, ou d'un réseau de communication. Lorsque la passerelle P est mise sous tension, le microcontrôleur 202 est capable de lire de la mémoire volatile 203 des instructions et de les exécuter. Ces instructions forment un programme d'ordinateur qui cause la mise en oeuvre, par le microcontrôleur 202, de tout ou partie des procédés décrits ci-dessus en relation avec la Fig. 1.

Le microcontrôleur 202 coopère avec les mémoires volatile et non volatile et les moyens 206 pour qu'un équipement E1 ou E2 puisse s'associer avec elles et pour extraire une autorisation AUT issue d'un signal reçu par les moyens 206. Une autorisation AUT est mémorisée, par exemple, sous forme d'un bit, dans la mémoire ROM.

La mémoire non volatile est également prévue pour mémoriser la liste des équipements L, par exemple sous la forme d'adresse MAC de ces équipements.

La Fig. 3 illustre schématiquement l'architecture d'un équipement E2.

L'équipement E2 comporte, reliés par un bus de communication 301 :
- un processeur, micro-processeur, microcontrôleur 302 ;
- une mémoire volatile 303 ;
- une mémoire non volatile 304;
- éventuellement, un lecteur 305 de médium de stockage, tel qu'un lecteur de carte SD (*Secure Digital Card* en anglais ou *Carte Numérique Sécurisée* en français) ;
- des moyens d'interface 306 avec un réseau de communication NET, comme par exemple un réseau de radiotéléphonie cellulaire ou Internet; et
- des moyens d'interface homme-machine 307 permettant, par exemple, de gérer un écran tactile et/ou un ensemble de touches et/ou des boutons.

Le microcontrôleur 302 est capable d'exécuter des instructions chargées dans la mémoire volatile 303 à partir de la mémoire non volatile 304, d'une mémoire externe (non représentée), d'un support de stockage, tel qu'une carte SD ou autre, ou d'un réseau de communication. Lorsque l'équipement E2 est mis sous tension, le microcontrôleur 302 est capable de lire de la mémoire volatile 303 des instructions et de les exécuter. Ces instructions forment un programme d'ordinateur qui cause la mise en oeuvre, par le microcontrôleur 302, de tout ou partie des procédés décrits ci-dessus en relation avec la Fig. 1.

Le microcontrôleur 302 coopère avec les mémoires volatile et non volatile et les moyens 306 pour envoyer une autorisation AUT à destination de la passerelle P pour qu'un équipement E2 puisse s'associer avec elle. Les moyens 306 sont également prévus, selon un mode de réalisation, pour recevoir une liste d'équipements L et coopèrent alors avec le microcontrôleur 302 pour traiter cette liste.

Tout ou partie des procédés décrits ci-dessus en relation avec la Fig. 1 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 202 et/ou 302, ou être implémenté sous forme matérielle par une machine ou un composant dédié, tel qu'un FPGA (*Field-Programmable GateArrayen* anglais ou *Matrice de Portes Programmable sur Champ* en français) ou un ASIC (*Application-SpecificIntegrated Circuit* en anglais ou *Circuit Intégré Spécifique à une Application* en français).

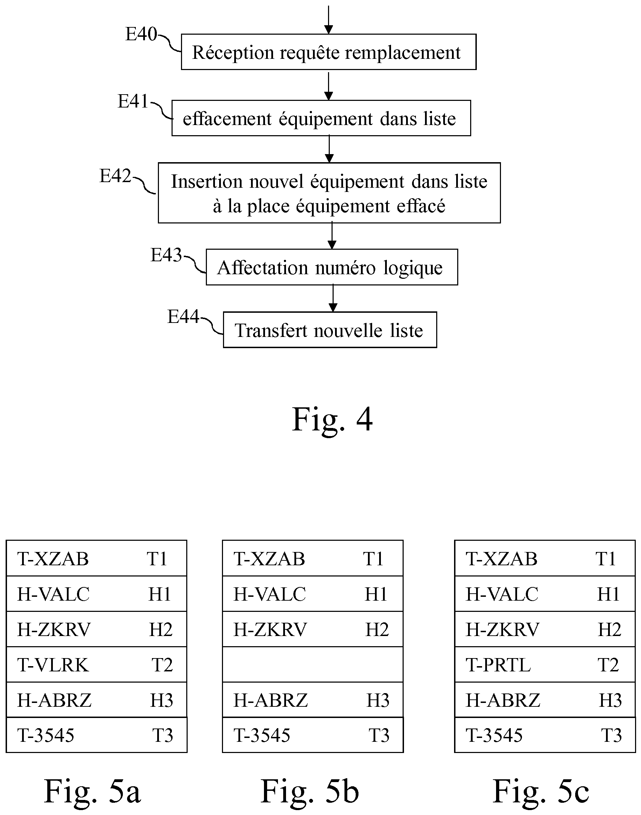

La Fig. 4 représente un exemple d'algorithme exécuté par la passerelle lorsqu'un équipement associé à la passerelle doit être remplacé.

A l'étape E40, la passerelle P reçoit du Serveur S une requête pour le remplacement d'un équipement associé à la passerelle P. L'équipement est par exemple l'équipement E1. L'équipement E1 est identifié par son numéro de série, par exemple le numéro VLRK. L'équipement E2 est destiné à remplacer l'équipement E2 et est identifié dans la requête par son numéro de série PRTL.

A l'étape E41, la passerelle P procède à l'effacement de l'équipement E1 dans la liste des équipements associés à la passerelle P.

Un exemple de liste des équipements associés à la passerelle P est représenté dans la Fig. 5a. Selon l'exemple de la Fig. 5a, six équipements sont associés à la passerelle P.

Un premier équipement de type T, de numéro de série XZAB et de type T est associé à la passerelle P et a un identifiant ou numéro logique T1. Le type de l'équipement est par exemple un capteur de température.

Un second équipement, de numéro de série VALC et de type H est associé à la passerelle P et a un identifiant ou numéro logique H1. Le type de l'équipement est par exemple un capteur d'humidité.

Un troisième équipement, de numéro de série ZKRV et de type H est associé à la passerelle P et a un identifiant ou numéro logique H2. L'identifiant est égal à H2 car le troisième équipement est le second équipement de type H dans la liste.

Un quatrième équipement, de numéro de série VLRK et de type T est associé à la passerelle P et a un identifiant ou numéro logique T2. L'identifiant est égal à T2 car le quatrième équipement est le second équipement de type T dans la liste. C'est l'équipement E1 à remplacer.

Un cinquième équipement, de numéro de série ABRZ et de type H est associé à la passerelle P et a un identifiant ou numéro logique H3. L'identifiant est égal à H3 car le cinquième équipement est le second équipement de type H dans la liste.

Un sixième équipement, de numéro de série 3545 et de type T est associé à la passerelle P et a un identifiant ou numéro logique T3. L'identifiant est égal à T332 car le sixième équipement est le troisième équipement de type T dans la liste.

La passerelle P efface le contenu de la ligne de la liste correspondant à l'équipement E1 à remplacer comme cela est montré à la Fig. 5d.

A l'étape E42, la passerelle P insère dans la liste le numéro de série de l'équipement E2 et son type dans la ligne dont le contenu a été effacé à l'étape E41.

A l'étape E43, la passerelle affecte un identifiant à l'équipement E2. Cet identifiant est identique à celui alloué à l'équipement E1 remplacé car l'équipement E2 est enregistré dans la liste à la même place que celle de l'équipement E1 comme cela est montré dans l'exemple de la Fig. 5c.

A l'étape E44, la passerelle P envoie la nouvelle liste au serveur S.

## Revendications

1. Procédé d'association d'au moins un équipement avec une passerelle prévue pour communiquer, d'une part, avec le au moins un équipement via un réseau de communication et, d'autre part, avec un autre équipement dit serveur, selon lequel une autorisation d'association est mémorisée dans la passerelle et comportant les étapes de :
- association du au moins un équipement avec la passerelle par un installateur ou un utilisateur,
- enregistrement par la passerelle d'une liste des équipements qui sont associés avec la passerelle,
- envoi par la passerelle au serveur de la liste des équipements associés,
- réception par la passerelle d'une interdiction qu'un équipement s'associe à la passerelle du serveur.

2. Procédé selon la revendication 1, **caractérisé en ce que** le procédé comporte une étape d'envoi, par le serveur et à destination de la passerelle, d'une autorisation pour qu'un équipement puisse s'associer avec cette passerelle.

3. Procédé selon l'une des revendications précédentes, dans lequel l'association d'un équipement avec la passerelle est conditionnée à une action mécanique préalable d'un utilisateur sur la passerelle.

4. Procédé selon l'une des revendications 1 à 3, dans lequel l'autorisation envoyée à la passerelle désigne aussi l'un des équipements qui lui est associé et le procédé se poursuit par la suppression de cet équipement de la liste des équipements mémorisée par la passerelle et un nouvel équipement est alors autorisé à être associé à la passerelle.

5. Procédé selon la revendication 4, **caractérisé en ce que** chaque équipement associé à la passerelle correspond à un type d'équipement et **en ce que** un identifiant est affecté à chaque équipement associé à la passerelle, l'identifiant étant déterminé en fonction du nombre d'équipements de même type que l'équipement qui précède l'équipement dans la liste.

6. Procédé selon la revendication 5, **caractérisé en ce que** le nouvel équipement autorisé à être associé à la passerelle a le même identifiant que l'équipement supprimé et est inséré dans la liste à la place de l'équipement supprimé.

7. Procédé selon l'une quelconque des revendications 1 à 7, **caractérisé en ce que** pour chaque équipement associé à la passerelle, la liste comporte un numéro de série de l'équipement, le type de l'équipement et l'identifiant de l'équipement.

8. Procédé selon la revendication 1, qui comporte une étape d'initialisation de l'autorisation qui est mémorisée par la passerelle.

9. Programme d'ordinateur, **caractérisé en ce qu'**il comprend des instructions pour mettre en oeuvre le procédé selon l'une des revendications 1 à 8 lorsque ledit programme est exécuté partiellement par un processeur d'une passerelle et d'un processeur d'un équipement.

10. Moyens de stockage, **caractérisés en ce qu'**ils stockent un programme d'ordinateur comprenant des instructions pour mettre en oeuvre le procédé selon l'une des revendications 1 à 8 lorsque ledit programme est exécuté partiellement par un processeur d'une passerelle et d'un processeur d'un équipement.

11. Passerelle comportant des moyens pour communiquer, d'une part, avec au moins un équipement via un réseau de communication et, d'autre part, avec un autre équipement, dit serveur, une autorisation d'association étant mémorisée dans la passerelle et la passerelle comportant en outre :
- des moyens d'association du au moins un équipement avec la passerelle par un installateur ou un utilisateur,
- des moyens d'enregistrement par la passerelle d'une liste des équipements qui sont associés avec la passerelle,
- des moyens d'envoi par la passerelle au serveur de la liste des équipements associés,
- des moyens de réception par la passerelle d'une interdiction qu'un équipement s'associe à la passerelle du serveur.

## Patentansprüche

1. Verfahren zum Assoziieren mindestens einer Einrichtung mit einem Gateway, das dazu vorgesehen ist, einerseits mit der mindestens einen Einrichtung über ein Kommunikationsnetz und andererseits mit einer anderen, Server genannten Einrichtung zu kommunizieren, gemäß dem eine Assoziierungsberechtigung in dem Gateway gespeichert wird und das die folgenden Schritte umfasst:
- Assoziieren der mindestens einen Einrichtung mit dem Gateway durch einen Installateur oder einen Verwender,
- Registrieren einer Liste der Einrichtungen, die mit dem Gateway assoziiert sind, durch das Gateway,
- Senden der Liste der assoziierten Einrichtungen durch das Gateway an den Server,
- Empfangen eines Verbots, dass eine Einrichtung mit dem Gateway assoziiert wird, vom Server durch das Gateway.

2. Verfahren nach Anspruch 1, **dadurch gekennzeichnet, dass** das Verfahren einen Schritt des Sendens einer Berechtigung durch den Server und an das Gateway umfasst, damit eine Einrichtung mit diesem Gateway assoziiert werden kann.

3. Verfahren nach einem der vorhergehenden Ansprüche, bei dem das Assoziieren einer Einrichtung mit dem Gateway eine vorherige mechanische Handlung eines Verwenders am Gateway bedingt.

4. Verfahren nach einem der Ansprüche 1 bis 3, bei dem die an das Gateway gesendete Berechtigung auch eine der Einrichtungen benennt, die mit ihm assoziiert ist, und das Verfahren mit dem Löschen dieser Einrichtung aus der vom Gateway gespeicherten Liste der Einrichtungen fortgesetzt wird und eine neue Einrichtung daraufhin berechtigt wird, mit dem Gateway assoziiert zu werden.

5. Verfahren nach Anspruch 4, **dadurch gekennzeichnet, dass** jede mit dem Gateway assoziierte Einrichtung einem Einrichtungstyp entspricht und dass jeder mit dem Gateway assoziierten Einrichtung eine Kennung zugewiesen wird, wobei die Kennung in Abhängigkeit von der Anzahl von Einrichtungen desselben Typs wie die Einrichtung, die der Einrichtung in der Liste vorausgeht, bestimmt wird.

6. Verfahren nach Anspruch 5, **dadurch gekennzeichnet, dass** die neue Einrichtung, die berechtigt ist, mit dem Gateway assoziiert zu werden, dieselbe Kennung wie die gelöschte Einrichtung hat und in der Liste an der Stelle der gelöschten Einrichtung eingefügt wird.

7. Verfahren nach einem der Ansprüche 1 bis 7, **dadurch gekennzeichnet, dass** die Liste für jede mit dem Gateway assoziierte Einrichtung eine Seriennummer der Einrichtung, den Typ der Einrichtung und die Kennung der Einrichtung umfasst.

8. Verfahren nach Anspruch 1, das einen Schritt zur Initialisierung der Berechtigung umfasst, die vom Gateway gespeichert wird.

9. Computerprogramm, **dadurch gekennzeichnet, dass** es Anweisungen zur Umsetzung des Verfahrens nach einem der Ansprüche 1 bis 8 umfasst, wenn das Programm teilweise von einem Prozessor eines Gateways und von einem Prozessor einer Einrichtung ausgeführt wird.

10. Speichermittel, **dadurch gekennzeichnet, dass** sie ein Computerprogramm speichern, das Anweisungen zur Umsetzung des Verfahrens nach einem der Ansprüche 1 bis 8 umfasst, wenn das Programm teilweise von einem Prozessor eines Gateways und von einem Prozessor einer Einrichtung ausgeführt wird.

11. Gateway mit Mitteln zum Kommunizieren einerseits mit mindestens einer Einrichtung über ein Kommunikationsnetz und andererseits mit einer anderen, Server genannten Einrichtung, wobei eine Assoziierungsberechtigung in dem Gateway gespeichert wird und das Gateway ferner umfasst:
- Mittel zum Assoziieren der mindestens einen Einrichtung mit dem Gateway durch einen Installateur oder einen Verwender,
- Mittel zum Registrieren einer Liste der Einrichtungen, die mit dem Gateway assoziiert sind, durch das Gateway,
- Mittel zum Senden der Liste der assoziierten Einrichtungen durch das Gateway an den Server,
- Mittel zum Empfangen eines Verbots, dass eine Einrichtung mit dem Gateway assoziiert wird, durch das Gateway vom Server.

## Claims

1. Method for associating at least one device with a gateway designed to communicate firstly with the at least one device via a communication network and secondly with another device known as a server wherein an authorisation for association is stored in the gateway and comprising the steps of:
- associating the at least one device with the gateway by an installer or a user,
- storing by the gateway of a list of devices that are associated with the gateway,
- sending the list of associated equipment by the gateway to the server,
- receiving by the gateway of a prohibition that a device to be associated with the gateway of the server.

2. Method according to claim 1, **characterised in that** the method comprises a step of sending, by the server and to the gateway, of an authorisation for a device to be associated with this gateway.

3. Method according to one of the preceding claims, wherein the association of a device with the gateway is dependent on a prior mechanical action by a user on the gateway.

4. Method according to one of claims 1 to 3, wherein the authorisation sent to the gateway also designates one of the devices that is associated therewith and the method continues with the deletion of this device from the list of devices stored by the gateway and a new device is then authorised to be associated with the gateway.

5. Method according to claim 4, **characterised in that** each device associated with the gateway corresponds to a type of device and **in that** an identifier is allocated to each device associated with the gateway, the identifier being determined according to the number of devices of the same type as the device that precedes the device in the list.

6. Method according to claim 5, **characterised in that** the new device authorised to be associated with the gateway has the same identifier as the deleted device and is inserted in the list in place of the deleted equipment.

7. Method according to any one of claims 1 to 7, **characterised in that**, for each device associated with the gateway, the list comprises a serial number of the device, the type of device and the identifier of the device.

8. Method according to claim 1, which comprises a step of initialising the authorisation that is stored by the gateway.

9. Computer program, **characterised in that** it comprises instructions for implementing the method according to one of claims 1 to 5 when said program is executed partially by a processor of a gateway and a processor of an item of equipment.

10. Storage means, **characterised in that** they store a computer program comprising instructions for implementing the method according to one of claims 1 to 8 when said program is executed partially by a processor of a gateway and a processor of an item of equipment.

11. Gateway comprising means for communicating firstly with at least one device via a communication network and secondly with another item of equipment, referred to as the server, an authorisation of association being stored in the gateway and the gateway further comprises:
- means for associating of said at least one device with the gateway by an installer or a user,
- means for registrating by the gateway of a list of devices associated with the gateway,
- means for sending the list of associated devices by the gateway to the server,
- means for the receiving by the gateway of a prohibition on an association of the device to the gateway from the server.
